# EUROPEAN PATENT APPLICATION

(11) **EP 4 269 787 A1**
(43) Date of publication of application: **01.11.2023**
(21) Application number: 22170544.5
(22) Date of filing: 28.04.2022
(51) Int. Cl.: F03D 80/00, H02J 11/00

(54) **SUPPLYING POWER TO AUXILIARY WIND TURBINE EQUIPMENT**

(71) Applicant: Siemens Gamesa Renewable Energy A/S, 7330 Brande (DK)
(72) Inventor: Thomas, Arwyn, Breaston, DE72 3AH (GB); Sørensen, Ruben Bak, 7080 Børkop (DK)
(74) Representative: SGRE-Association

(57) **Abstract**

A wind turbine (2) is provided. The wind turbine comprises a DC-distribution network (2), connected or connectable at a DC connection node (3) to receive DC power (P); and at least one variable drive system (4a, 4b, ..., 4x) connected or connectable to the DC-distribution network (2). Methods for operating a wind turbine are also provided.

## Description

### Field of invention

The present invention relates to a wind turbine which is arranged to supply power to at least one variable drive system and is thereby enabled to supply power to auxiliary equipment. Furthermore, the method relates to a method of operating a wind turbine including to supply power to at least one variable drive system.

### Art Background

A conventional wind turbine may comprise an AC power network for supplying power to auxiliary equipment of the wind turbine. The AC power network may for example operate at a voltage of for example between 690 V and 415 V. Conventionally, direct-on-line motors may be supplied with the AC power in order to generate mechanical movement for specific actions such as cooling, operating a fan, operating a yaw motor, etc.

It has however been recognized that direct-on-line motors generate considerable noise which may be cumbersome in particular during partial load operation of the wind turbine.

Thus, there may be a need for a wind turbine and for a method of operating the wind turbine, wherein complexity of auxiliary equipment power supply is reduced and cost may be reduced. Furthermore, there may be a need for the wind turbine and an operating method of the wind turbine, wherein noise emissions are reduced, in particular during partial load operation.

### Summary of the Invention

This need may be met by the subject matter according to the independent claims. Advantageous embodiments of the present invention are described by the dependent claims.

Embodiments of the present invention utilize one or more variable frequency drives instead of direct-on-line motors. The variable frequency drives may bring efficiency and noise benefits in particular when operating in partial mode and also may provide the possibility of temporary boost rating.

In a first aspect a wind turbine is provided. The wind turbine comprises: a DC-distribution network, connected or connectable at a DC connection node to receive DC power; and at least one variable drive system connected or connectable to the DC-distribution network.

The wind turbine comprises a wind turbine tower, a nacelle rotatably mounted on top of the tower, wherein the nacelle harbours a rotor at which plural rotor blades are connected. The rotor is mechanically coupled to a generator system, which may for example comprise a generator, such as a synchronous permanent magnet generator, and a conversion system capable of converting the variable frequency AC power stream to a substantially fixed frequency AC power stream. The wind turbine may further comprise a wind turbine transformer which transforms the voltage of the fixed frequency AC power stream to a higher voltage for supply or transmission to a utility grid.

The DC connection node may be a terminal or a bus bar via which the DC distribution network receives DC power. The DC power may be supplied either from the wind turbine and/or from the utility grid, depending of the operational mode of the wind turbine or depending on whether the wind turbine is operating or is not operating. During normal operation, when the wind turbine produces electric energy and supplies electrie energy to the utility grid, the DC distribution grid may receive DC power from the wind turbine generator, in particular via a "DC power providing AC-DC converter", which is explained below. If the wind turbine is not producing electric energy and is not supplying electric energy to the utility grid, the DC distribution network may receive the DC power from the utility grid in particular via a DC power providing AC-DC converter.

The DC distribution network may be operated at a suitable voltage such as for example between 1.500 V and 500 V DC. In particular, the DC distribution network may be operated at a voltage between for example 800 V and 500 V DC, in particular at around 600 V DC. The voltage at which the DC distribution network is operated may be adapted according to the requirements of the at least one variable speed drive system regarding electrical properties.

The DC distribution network may comprise one or more DC strands or DC wires or cables which may be layout or arranged at or within the wind turbine, in particular within the nacelle and/or within the wind turbine tower and/or hub. A conventional AC power network within the wind turbine may be dispensed with. Thus, in particular all variable drive systems or all auxiliary equipment of the wind turbine may be supplied with electrical power via the DC distribution network, without being supplied with electric energy via an AC distribution network.

The variable drive system may comprise a conversion system for converting the DC power into suitable AC power and may further comprise at least one variable speed motor. The wind turbine may for example comprise between 5 and 100 or more variable drive systems all being supplied with electrical energy via the DC distribution network.

Each variable drive system may comprise its own conversion system. Conventionally, variable frequency drives or speed drives may have been operated by supplying AC power to a back-to-back inverter, i.e. an AC-DC/DC-AC converter, to rectify the AC supply to direct current and then convert to AC having the correct frequency afterwards to provide the variable speed control of the final motor application. Conventionally, a back-to-back converter for a three phase system typically needs a minimum of 12 power switching devices for a two-level system, thereby increasing the cost of the individual auxiliary motors and variable frequency drive when compared to direct-on-line motors. Furthermore, the space requirement is also increased by requiring a back-to-back inverter which may require its own cooling arrangement.

According to embodiments of the present invention however, each variable drive system does not require any more an AC-DC/DC-AC converter, but merely may require a DC-AC converter. Thus, the variable drive system according to embodiments of the present invention may require less space and may have a lower complexity and lower cost than a conventionally used variable drive system which is powered via an AC distribution network.

In an example, the wind turbine may further comprise at least one DC power providing AC-DC converter connectable/connected to a generator and/or to a utility grid and configured to convert AC power to DC power at the DC connection node.

The DC power providing AC-DC converter is with its DC terminals connected to the DC distribution network, via the at least one DC connection node or terminal. The DC connection node may in particular carry the positive DC current or pole.

Examples of the present invention may comprise only one DC power providing AC-DC converter or may comprise more than one, such as two, three, four or even a higher number of DC power providing AC-DC converters. The DC power providing AC-DC converter may advantageously convert AC power to DC power which is then available in the distribution network and may thus be supplied to the at least one variable drive system. There may be one or more sources of electric energy, being namely the generator of the wind turbine and/or the utility grid, which may in particular depend on the operational state of the wind turbine and/or the utility grid.

In an example, the wind turbine may further comprise a generator for generating AC generator power from wind impacting at plural rotor blades; a main converter including at least an AC-DC converter portion coupled to the generator to receive the AC generator power and configured to provide DC-power at the DC connection node; wherein the DC power providing AC-DC converter includes at least the AC-DC converter portion of the main converter.

The generator may comprise a synchronous or asynchronous electrical generator, in particular synchronous permanent magnet generator. The generator may provide three electrical phases carrying currents which are phase-shifted by 120°. The AC generator power may be received by the main converter. The AC-DC converter portion of the main converter then is configured to convert the received AC generator power to DC power at AC-DC converter portion output terminals which may be coupled (via one or more switches for example) to the DC connection node. Thus, in the explained embodiment, the aforementioned DC power providing AC-DC converter includes at least the AC-DC converter portion of the main converter (but may include further components).

Thereby, during normal operation of the wind turbine, when the wind speed is high enough such that the wind turbine produces electrical energy, the DC distribution network may exclusively or at least partly receive the DC power from the wind turbine generator.

In an example, the main converter may further comprise a DC-link connected or connectable to the AC-DC converter portion of the main converter, in particular one DC terminal of the DC-link providing or connected to the DC connection node; and a DC-AC converter portion connected or connectable to the DC-link.

The DC link may comprise a capacitor for smoothing the DC power as output by the AC-DC converter portion of the main converter. The DC-AC converter portion of the main converter may be configured to convert the DC power to AC power having substantially fixed frequency, such as a typical grid frequency for example 50 Hz or 60 Hz.

The DC link may therefore be connected to the DC distribution network, in particular via the DC connection node. Thereby, a conventional wind turbine converter is supported.

In an example, the DC power providing AC-DC converter may be at least partly formed by an additional AC-DC converter which is connected or connectable to the utility grid, in particular via a wind turbine transformer, and may be configured to convert AC grid power to DC power.

The additional AC-DC converter may be provided in order to supply the DC distribution network with DC power from the utility grid. This may be performed in particular, when the wind turbine is not producing electrical power, such as at a low wind condition or upon a failure or fault at the wind turbine. When the additional AC-DC converter is provided, the at least one variable drive system and in particular all auxiliary equipment of the wind turbine may still further be operated by receiving electrical power from the utility grid. Thereby, safety operations may still be performed and the wind turbine may also be prepared for an intended re-start, when the wind speed increases.

It should be understood, that the wind turbine may comprise both, the AC-DC converter portion of the main converter as well as the additional AC-DC converter such that DC power is reliably and in a safe manner to be received from any electrical power source, irrespective of the operational state of the wind turbine.

In an example, the variable drive system may comprise a DC-AC converter connected or connectable to the DC-distribution network and allowing to convert the DC power to AC power having adjustable frequency and/or voltage and/or amount of power; and a variable drive motor connectable or connected to the DC-AC converter.

Each of the at least one variable drive system may comprise a respective individual DC-AC converter which may be connected (in parallel) to the DC distribution network. Each variable drive system may be operated at an individual frequency or speed and/or voltage and/or power as is individually provided by the respective associated DC-AC converter. Thereby, particularities of the variable drive motors may be considered and taken into account and also desired operational modes of the respective variable drive motors may be achieved as intended or desired. Thereby, particularities of operational modes of the wind turbines may be accounted for.

In an example, the DC-AC converter may be adapted and/or sized regarding power capacity and/or voltage and/or current and/or number of phases and/or frequency of the output AC power to comply with a requirement of the variable drive motor.

For example, a first DC-AC converter associated with a first variable drive motor which requires a first amount of electrical power and/or a first frequency and/or a first voltage may be adapted to exactly provide the AC power as required or needed by the first variable drive motor. Thus, the characteristic of each individual DC-AC converter may be adapted according to the requirements of the associated variable drive motor which is connected to the respective DC-AC converter. Thereby, great flexibility may be provided.

In an example, the variable drive system may comprise a variable drive system controller, coupled with the DC-AC converter and configured to control the DC-AC converter regarding frequency and/or voltage and/or power of AC output power, wherein the variable drive system controller may be configured to down regulate and/or reduce speed and/or reduce power consumption of the variable drive motor at partial load, in order to reduce noise emission.

The DC-AC converter of the variable drive system may comprise plural controllable power switches, such as power transistors, which may be switched in order to generate at output terminals of the DC-AC converter the AC power having the intended electrical characteristics, in particular regarding voltage and/or frequency and/or power. When the variable drive system controller is provided, the variable drive system controller may generate and supply for example gate driver signals to gates of the plural controllable switches of the DC-AC converter. Thereby, at the AC output terminals of the DC-AC converter, an intended or desired AC power having a desired intended characteristics can be ensured or generated.

Conventionally, when direct-on-line motors are used, they cannot be down-regulated but may run always at a same constant speed. However, according to some examples of the present invention, the variable drive system controller may down-regulate the speed, i.e. frequency, and may also adapt or change other electrical characteristics of the AC output power in order to, in an improved manner, operate the associated variable drive motor. In particular, noise emissions may be reduced.

In an example, the DC-distribution network may be partly or entirely arranged inside a nacelle and/or hub and/or tower of the wind turbine, wherein the DC-distribution network may comprise one DC conductor strand providing a positive phase, wherein a negative or neutral phase of the DC-distribution network may be provided by at least a part of a casing and/or of a housing and/or of a steel framework of the nacelle and/or a tower and/or hub of the wind turbine.

The DC distribution network may comprise one or two DC conductor strands, one DC conductor strand providing a positive phase and one providing a negative or neutral phase. In another embodiment the DC distribution network comprises only one DC conductor strand providing a positive phase and the neutral phase is provided by metal or conducting material which is continuously connected to each other and is arranged within the wind turbine, for example structural metal elements or casing portions which may all be manufactured from metal or conducting material. Thereby, it may not be necessary to arrange or layout a second DC conductor strand or wire.

In an example, a rating, in particular insulation rating and/or thermal rating and/or voltage rating of the DC conductor strand may be smaller than a rating of a hypothetical AC conductor strand capable of carrying a same amount of power.

Thereby, the space requirement and the weight of the DC conductor strand may be reduced compared to AC conductor strands which may have been utilized in a conventional system. Also costs may be reduced.

In an example, the wind turbine further may comprise a battery or accumulator storage system connected or connectable to the DC distribution network. Advantageously, a conversion element may not be required in order to charge the battery or accumulator system via the distribution network or withdraw electrical energy from the battery or accumulator storage system into the DC distribution network.

The DC distribution network may receive the DC power via the AC-DC converter portion of the main converter, or via the utility grid, and optionally, a DC/DC converter system which may be provided/connected between the power source and the DC distribution network. The DC/DC converter system may be capable of transforming the voltage to a suitable or desired voltage value which is to be present within the DC distribution network. The DC/DC converter may also be referred to as a buck converter. The DC/DC converter may provide a transformation function, but may not be configured as a conventional transformer requiring at both, i.e. primary and secondary, coils AC currents or power.

In an example, the at least one variable drive system may comprise a first variable drive system configured to operate at least at a first parameter (or parameter set) such as first frequency and/or first voltage and/or a first number of phases and/or first rating; and a second variable drive system configured to operate at least at a second parameter (or parameter set) such as second frequency and/or second voltage and/or a second number of phases and/or second rating, wherein the second parameter is different from the first parameter, or in case of a parameter set, wherein at least one of the second parameters in the second parameter set is different from its respective first parameter of the first parameter set. For instance, second voltage may be different from first voltage.

Thereby, different electrical characteristics required by different variable drive systems may be supported, all being supplied with the power via the DC distribution network.

In an example, the variable drive motor may comprise at least one of the following: a motor of auxiliary equipment, a fan, a motor, a pump, a yaw motor, a dehumidification system, a cooling system motor, a compressor. Thereby, conventionally present auxiliary equipment or motors may be supported.

It should be understood that features, individually or in any combination, disclosed, described, explained or provided for a wind turbine may also, individually or in any combination, apply or may be provided for a method of operating a wind turbine, according to embodiments of the present invention and vice versa.

In a further aspect, a method of operating a wind turbine is provided. The method comprises receiving, at a DC connection node of DC-distribution network, DC power; receiving, in an at least one variable drive system connected to the DC-distribution network, at least a part, e.g. a portion, of the DC power.

The method may be performed by the wind turbine as described according to other embodiments of the present invention.

In an example, the method may further comprise operating the variable speed system during a first time period at a first frequency; operating the variable speed system during a second time period at a second frequency, lower than the first frequency, in particular during partial load of the wind turbine.

Thereby, noise emission or power consumption may be reduced in situations or operational modes when for example higher speed or higher power may not be required.

### Brief Description of the Drawings

Embodiments of the present invention are now described with reference to the accompanying drawings. The invention is not restricted to the illustrated or described embodiments.
Figure 1 schematically illustrates a wind turbine according to an example, and
Figure 2 illustrates a flow chart of a method for operating a wind turbine according to an example.

### Detailed Description

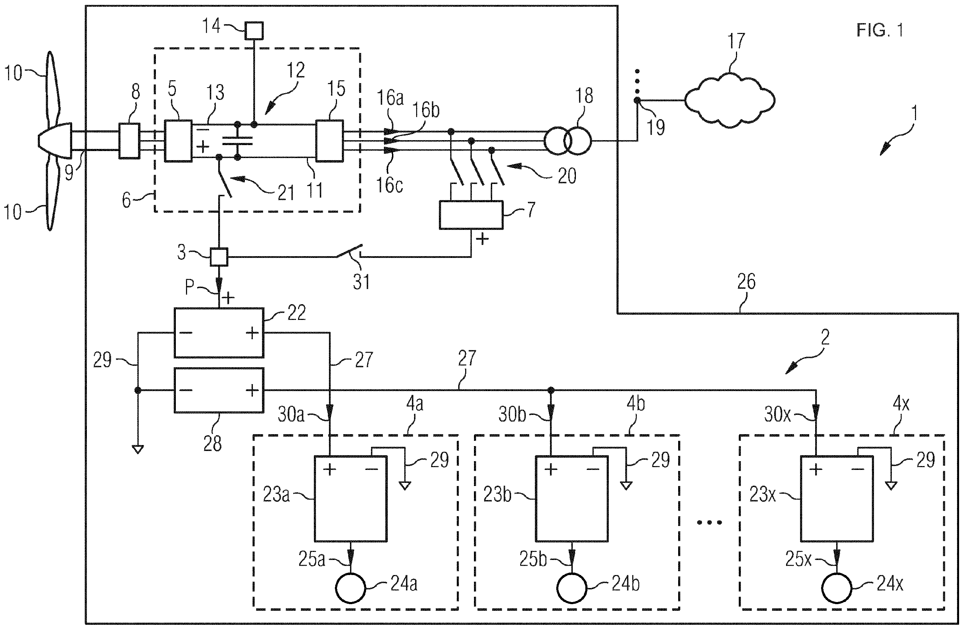

The wind turbine 1 schematically illustrated in Figure 1 may comprise a DC distribution network 2 connected at or to a DC connection node 3 to receive DC power P. The wind turbine 1 may further comprise at least one variable drive system 4 which for example in the illustrated example comprises variable drive systems 4a, 4b, ..., 4x. The wind turbine 1 may comprise at least one DC power providing AC-DC converter, which may for example comprise the AC-DC converter portion 5 of a main converter 6 of the wind turbine and/or an additional AC-DC converter 7, as described below.

In the illustrated example, the wind turbine 1 may comprise a main converter 6 which may be coupled to a generator 8 which may be mechanically coupled to a rotor 9 at which plural rotor blades 10 are mounted. Upon rotation of the rotor 9, the generator 8 outputs for example three-phase AC power having a variable frequency. The main converter may comprise at least the AC-DC converter portion 5 which may be coupled to the generator 8 to receive the AC generator power and may be configured to provide DC power at a DC link 12.

The DC connection node 3 may optionally be electrically connected to a positive busbar 11 (carrying positive DC current) of the DC link 12.

Other examples of the present invention may dispense with the DC-link. The system may work just as well by having the AC-DC converter only and not relying on the main converter DC link - this may even be preferable in some designs.

The AC-DC converter portion 5 of the main converter 6 outputs substantially DC power at the positive busbar 11 and a negative or neutral busbar 13 of the DC link 12. The negative or neutral busbar 13 may form the back path of the DC current. The neutral busbar may, via one or more switches, be connected or connectable for example to a casing or a steel framework of the wind turbine. In particular, the neutral strand 13 may for example be connected or connectable to a neutral connection node 14 to which via one or more switches or breakers, a casing and/or a steel support framework of the wind turbine may be electrically connected to.

The main converter 6 may further comprise, besides the AC-DC converter portion 5 and the DC link 12, a DC-AC converter portion 15 which may be connected to the DC link 12. The DC-AC converter portion 15 may be configured to convert the DC power to AC power 16a, 16b, 16c having three phases, which may have substantially a frequency of the utility grid 17. Via an optional wind turbine transformer 18 the output power 16a, 16b, 16d output by the main converter 6 may be supplied, for example via a point of common coupling 19 to which other plurality of wind turbines (not shown) are connected, to the utility grid 17.

The wind turbine 1 may comprise the additional AC-DC converter 7 which may be connected to the utility grid 17 via the wind turbine transformer 18. The AC-DC converter 7 may be configured to convert the AC grid power to the DC power P. In particular, the additional AC-DC converter 7 may be s connected to a location between the wind turbine transformer 18 and the main converter 6 via power switches 20. During normal operation, while the wind turbine is outputting power 16a, 16b, 16c, the switches 20 may be open. The switches 20 may be closed in a situation, when the wind turbine does not produce energy due for example to low wind conditions. A positive DC output terminal of the additional AC-DC converter 7 may be connected to the DC connection node 3, in particular via a breaker 31.

During the low wind condition an optional breaker 21 between the plus busbar or conductor 11 of the DC link 12 and the DC connection node 3 may be opened. When the wind turbine 8 produces electrical energy, the breaker 21 may be closed in order to supply DC power from the generator 8 and the converter portion 5 to the DC distribution network 2.

In the illustrated example, the DC distribution network 2 may receive the DC power via an optional DC/DC converter which may be capable of down-transforming the output voltage received at the DC connection node 3. In particular, the voltage received at the connection node 3 may be between 800 V and 1.500 V DC. The DC/DC converter 22 connected at the DC connection node 3, may for example down-transform the voltage to a level of between 500 V DC and 700 V DC, e.g. to substantially 600 V DC.

The variable drive system 4a (and similarly the other variable drive systems 4b, ..., 4x) may comprise a respective DC-AC converter 23a, 23b, ..., 23x and a variable drive motor 24a, 24b, ..., 24x. The respective DC-AC converter 23a, 23b, ..., 23x may be connected to the DC distribution network 2 and allows to convert the DC power to AC power 25a, 25b, ..., 25x having adjustable frequency and/or voltage and/or amount of power. The variable drive motor 24a, 24b, ..., 24x may be connected to the respective DC-AC converter 23a, 23b, ..., 23x. The DC-AC converters 23a, 23b, ..., 23x may comprise respective variable drive system controllers (not shown in detail) which may adapt the respective electrical characteristics of the output power 25a, 25b, ..., 25x, to the requirements as needed.

The entire or at least a part of the DC distribution grid 2 may be arranged within a (schematically illustrated) nacelle 26 of the wind turbine 1. The DC distribution network 2 may comprise one DC conductor strand 27 having several portions or being connected to each other. The DC conductor strand 27 may carry a positive DC current to the active variable drive systems 4a, 4b, ..., 4x. The DC conductor strand portions 27 may have a rating which is smaller than a rating of a hypothetical AC conductor strand capable of carrying the same amount of power.

A neutral phase 29 of the DC distribution network 2 may be provided for example by at least a part of a casing and/or a housing and/or of a steel framework of the nacelle and/or a tower (not shown in detail) of the wind turbine and/or a hub of the wind turbine. The DC conductor strand 27 may carry a positive DC current and represent a positive phase of the DC distribution network 2.

The wind turbine 1 may further comprise a battery or accumulator storage system 28 which may be connected or connectable to the DC distribution network 2.

In the illustrated example, the first variable drive system 4a may be configured to operate at least at a first parameter or at a first parameter set. Such at least first parameter or parameter set may comprise a first frequency, a first voltage (such as 400 V AC), a first number of phases (for example three phases) and/or a first rating.

A second variable drive system 4b may be configured to operate at least at a second parameter or at a second parameter set. Such at least second parameter or parameter set may comprise a second frequency, a second voltage (for example 230 V AC), a second number of phases (for example two phases or one phase) and/or a second rating, wherein the at least second parameter may be different from the respective first parameter. That is, in an example wherein the first and second parameters are frequency, the second frequency may be different to the first frequency. In another example, the first variable drive system may comprise a first parameter set comprising first frequency and first voltage and the second variable drive system may comprise a second parameter set comprising second frequency and second voltage. In such example, second frequency may be different to the first frequency and, second voltage may be different to the first voltage.

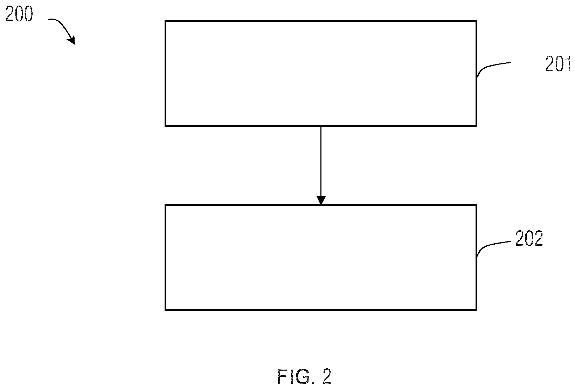

The wind turbine 1 illustrated in Fig. 1 may be capable of carrying out a method of operating a wind turbine according to the example of Figure 2.

Figure 2 depicts a flow chart of a method 200 for operating a wind turbine 1 according to any of the disclosed examples. The method 200 may comprise, in box 201, receiving, at a DC connection node 3 of a DC distribution network 2 DC power P. The method 200 may further comprise, in box 202, receiving, in an at least one variable drive system 4a, 4b, ..., 4x, connected to the distribution network 2, at least part, e.g. a portion; of the DC power P. In particular, the respective drive systems 4a, 4b, ..., 4x may receive a portion 30a, 30b, 30x, respectively, of the DC power P.

According to an example, a DC power distribution may be provided to supply power to the auxiliary system within the turbines so that only a DC-AC converter is required at the respective auxiliary motor. The DC network may be provided in the turbine from which power may be supplied to the auxiliary systems on board (for example fans, fan motors, pumps, yaw motors, etc.). Thereby, the number of power electronics needed at each motor may be reduced by half for variable frequency drives, with one (or two for redundancy) large efficiency optimized AC-DC converters being required in the turbine, minimizing component count. The DC network may directly be supplied from an inverter module DC link.

Thereby, it may be allowed that the form factors of the final motors and drive units to be smaller and consume less power, while also providing variable frequency control with the associated benefits. The DC connection may be rated for higher voltage than AC allowing a higher power transfer for the same cable insulation rating and cable thermal rating.

The DC power may be sourced from the inverter module DC link.

According to an example of the present invention, a DC power distribution may be applied into a wind turbine to power the auxiliary systems onboard allowing for utilization of variable frequency drives at reduced cost. By using variable speed drives, the auxiliary motors or fans, etc. can be derated at partial loading allowing for improved efficiency and reduced noise emissions.

By having the DC network, it could be integrated more easily with a battery energy storage system (BESS) allowing for a modular approach to the specification of the auxiliary system.

An onboard DC network would also be agnostic to the grid frequency, meaning that the same auxiliary electrical system could be used for 50 Hz or 60 Hz utility grids. When the chassis or a structural metal frame within the wind turbine is used as return path (neutral phase), this could minimize the required cabling layout of the distribution network within the nacelle.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. A wind turbine (2), comprising:
a DC-distribution network (2), connected or connectable at a DC connection node (3) to receive DC power (P); and
at least one variable drive system (4a, 4b, ..., 4x) connected or connectable to the DC-distribution network (2).

2. The wind turbine according to the preceding claim, further comprising:
at least one DC power providing AC-DC converter (5, 7) connectable/connected to a generator (8) and/or to a utility grid (17) and configured to convert AC power to DC power at the DC connection node (3).

3. The wind turbine according to the preceding claim, further comprising:
a generator (8) for generating AC generator power from wind impacting at plural rotor blades (10);
a main converter (6) including at least an AC-DC converter portion (5) coupled to the generator (8) to receive the AC generator power and configured to provide DC-power at the DC connection node (3);
wherein the DC power providing AC-DC converter includes at least the AC-DC converter portion (5) of the main converter (6) .

4. The wind turbine according to the preceding claim, the main converter (6) further comprising:
a DC-link (12) connected or connectable to the AC-DC converter portion (5) of the main converter (6), in particular one DC terminal (11) of the DC-link (12) providing or connected to the DC connection node (3); and
a DC-AC converter portion (15) connected or connectable to the DC-link.

5. The wind turbine according to any of the preceding claims 2 to 4, wherein the DC power providing AC-DC converter is at least partly formed by an additional AC-DC converter (7) which is connected or connectable to the utility grid (17), in particular via a wind turbine transformer (18), and is configured to convert AC grid power to DC power.

6. The wind turbine according to any of the preceding claims, wherein the variable drive system (4a, 4b, ..., 4x) comprises:
a DC-AC converter (23a, 23b, ..., 23x) connected or connectable to the DC-distribution network and allowing to convert the DC power to AC power having adjustable frequency and/or voltage and/or amount of power; and
a variable drive motor (24a, 24b, ..., 24x) connectable or connected to the DC-AC converter (23a, 23b, ..., 23x).

7. The wind turbine according to the preceding claim, wherein the DC-AC converter (23a, 23b, ..., 23x) is adapted and/or sized regarding power capacity and/or voltage and/or current and/or number of phases and/or frequency of the output AC power to comply with a requirement of the variable drive motor (24a, 24b, ..., 24x).

8. The wind turbine according to any of the preceding claims, the variable drive system (4a, 4b, ..., 4x) comprises:
a variable drive system controller, coupled with the DC-AC converter and configured to control the DC-AC converter regarding frequency and/or voltage and/or power of AC output power,
wherein the variable drive system controller is configured to down regulate and/or reduce speed and/or reduce power consumption of the variable drive motor at partial load, in order to reduce noise emission.

9. The wind turbine according to any of the preceding claims, wherein the DC-distribution network (2) is partly or entirely
arranged inside and/or at a nacelle (26) and/or hub and/or tower of the wind turbine,
wherein the DC-distribution network (2) comprises one DC conductor strand (27) providing a positive phase,
wherein a negative or neutral phase of the DC-distribution network is provided by at least a part of a casing and/or of a housing and/or of a steel framework of the nacelle and/or a tower of the wind turbine.

10. The wind turbine according to the preceding claim, wherein a rating, in particular insulation rating and/or thermal rating and/or voltage rating of the DC conductor strand (27) is smaller than a rating of a hypothetical AC conductor strand capable of carrying a same amount of power.

11. The wind turbine according to any of the preceding claims, further comprising:
a battery or accumulator storage system (28) connected or connectable to the DC distribution network (2).

12. The wind turbine according to any of the preceding claims,
wherein the at least one variable drive system comprises:
a first variable drive system (4a) configured to operate at least at a first parameter such as first frequency and/or first voltage and/or a first number of phases and/or first rating; and
a second variable drive system (4b) configured to operate at least at a second parameter such as second frequency and/or second voltage and/or a second number of phases and/or second rating, the second parameter is different from the respective first parameter.

13. The wind turbine according to any of the preceding claims, wherein the variable drive motor (4a, 4b, 4x) comprises at least one of the following:
a motor of auxiliary equipment;
a fan;
a motor;
a pump;
a yaw motor;
a dehumidification system;
a cooling system motor;
a compressor.

14. A method of operating a wind turbine (1), comprising:
receiving, at a DC connection node (3) of DC-distribution network (2), DC power (P);
receiving, in an at least one variable drive system (4a, 4b, 4x) connected to the DC-distribution network, at least a part (30a, 30b, 30x) of the DC power (P).

15. The method according to the preceding claim, further comprising:
operating the variable speed system during a first time period at a first frequency;
operating the variable speed system during a second time period at a second frequency, the second frequency being lower than the first frequency, in particular during partial load of the wind turbine.
